(19) Europäisches Patentamt / European Patent Office / Office européen des brevets

(11) **EP 2 332 212 B1**

(12) **EUROPEAN PATENT SPECIFICATION**

(45) Date of publication and mention of the grant of the patent:
**08.07.2015 Bulletin 2015/28**

(51) Int Cl.:
*H01Q 21/24* (2006.01)  *H04B 7/10* (2006.01)
*H01Q 1/24* (2006.01)

(21) Application number: **08803344.4**

(22) Date of filing: **28.08.2008**

(86) International application number:
**PCT/EP2008/061343**

(87) International publication number:
**WO 2010/022784 (04.03.2010 Gazette 2010/09)**

(54) **ANTENNA ARRANGEMENT FOR INTERFERENCE REDUCTION AND MIMO COMMUNICATION**

ANTENNENANORDNUNG ZUR STÖRUNGSVERRINGERUNG UND MIMO-KOMMUNIKATION

AGENCEMENT D'ANTENNE POUR DIMINUTION D'INTERFÉRENCE ET COMMUNICATION MIMO

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**15.06.2011 Bulletin 2011/24**

(73) Proprietor: **Optis Cellular Technology, LLC Plano, TX 75025 (US)**

(72) Inventors:
• **SIMONSSON, Arne**
  **S-954 33 Gammelstad (SE)**
• **ASPLUND, Henrik**
  **S-117 34 Stockholm (SE)**
• **HAGERMAN, Bo**
  **S-135 52 Tyresö (SE)**

(74) Representative: **Grünecker Patent- und Rechtsanwälte**
  **PartG mbB**
  **Leopoldstraße 4**
  **80802 München (DE)**

(56) References cited:
**EP-A- 0 543 519    EP-A- 0 600 799
EP-A- 1 227 539    EP-A- 2 031 768**

**Description**

TECHNICAL FIELD

The present invention relates to an antenna arrangement for use in a wireless communication system. The arrangement comprises at least two single-polarized antenna functions, which are adapted for radiating an antenna radiation lobe pattern having a horizontal extension in an azimuth plane, and a vertical extension in an elevation plane, perpendicular to the azimuth plane. The antenna functions both have essentially a first polarization in a first direction.

The present invention also relates to a node in a wireless communication system, the node comprising an antenna arrangement according to the above.

BACKGROUND

In cellular systems for wireless communication, base stations of different kinds are normally used. A typical base station (BS) in a cellular system is often deployed above roof-top level or in a high mast, increasing its coverage area. This gives a high likelihood for line-of-sight between base stations, which can lead to significant BS-to-BS station interference, in particular when a relatively high transmission power is used.

EP 1 227 539 A1 discloses an antenna array comprising at least two groups of antennas where each group comprises at least two pairs of antennas, each of the pairs in a group containing orthogonally polarised antennas.

In a Time Division Duplex (TDD) system, uplink data traffic (to a BS) and downlink data traffic (from a BS) use the same frequency carrier, but are separated in time. During a first time period, the downlink data traffic is active, and during a second time period the uplink data traffic is active, the downlink data traffic and uplink data traffic not being active at the same time.

This may cause problem if two cells have different periods where uplink data traffic and downlink data traffic are active, which results in a period of overlap, where uplink data traffic and downlink data traffic are active at the same time, resulting in interference.

In a TDD system, the BS-to-BS and MS-to-MS station interference within the system can be severe since transmission and reception are done on the same frequency. Even if the two cells are located in adjacent carrier frequencies, the interference could be significant.

The interference situation is improved if all base stations synchronize their transmission and reception time windows. Due to propagation delay, guard periods, or silent periods, are needed to allow the transmissions from far away base stations to decay to an acceptable level. Time synchronized interference to neighboring carriers can be suppressed similarly. For the case with two unsynchronized TDD systems transmitting on adjacent frequency bands, the interference in uplink slots from base stations transmitting in downlink on the neighboring carrier can be very strong.

Due to propagation delay over the air, the interference from neighbouring base stations transmitting on the same carrier will be high directly after the switch from DL transmission to UL reception.

In a Frequency Division Duplex (FDD) system, the uplink and downlink activities use different frequencies for their carriers, and thus the BS-BS, and MS-MS, interference is typically highly suppressed by the use of duplex filters and large separation between the uplink and downlink bands.

However, in some cases FDD systems are deployed at frequencies such that the downlink of one FDD system is close to the uplink of the other, e.g. use of both 800 MHz and 900 MHz frequency plans.

Furthermore, in relevant sharing scenarios, FDD and TDD systems may be required to coexist at frequency separations which are much less separated than the typical FDD duplex distance. Additional guard bands and conformance to tight spectrum masks may be required for minimizing interference between the two systems.

BS-to-BS interference can also be reduced by increasing the separation between base stations or by avoiding line-of-sight situations. However, this severely limits the operator choice of deployment alternatives and site locations.

There are a number of drawbacks with the existing solutions to the interference problems discussed:

- Guard bands and guard periods represent unused resources and lead to lower spectrum efficiency.

- Sharpening the filter requirements only work when the interferer and the victim of the interference are located on different carriers, and even then the filters present physical entities with certain costs and limitations

- Increased physical separation is often not a practical solution and severely limits the operators site location choices. If the second system is deployed after the first system, the first systems locations are already in place and choices are limited.

- Synchronization in TDD may be difficult or even impossible if there are two different technology TDD systems (e.g WiMax and LTE/TDD) deployed on neighboring frequency bands.

- Synchronization between uplink and downlink usage is in general not possible in a sharing situation between a TDD and a FDD system, e.g. WiMax or LTE/TDD on the one hand and LTE/FDD or WCDMA (Wideband Code Division Multiple Access) or WCDMA HSPA (High Speed Packet Access) on the other hand.

MIMO (Multiple Input Multiple Output) is an emerging concept that will be used for example in LTE (Long Term Evolution). The MIMO concept makes use of two or more transmitting antennas and two or more receiving antennas to enable simultaneous communication of multiple data streams. The antenna functions or positions need to differ in order to give sufficiently de-correlated channels such that the data streams can be made separable. One possibility is to use different polarizations to communicate different data streams, using one polarization for each data stream. Polarized transmission of MIMO streams is therefore an attractive antenna solution for MIMO.

There clearly exists a need to obtain an arrangement that provides reduced interference between base stations, which arrangement does not have the drawbacks discussed above, and where communication between a base station and a user terminal, such as a mobile phone, using MIMO, is made possible.

SUMMARY

It is an object of the present invention to reduce interference between base stations, while making communication between a base station and a user terminal, such as a mobile phone, possible using MIMO without the drawbacks discussed above.

This object is solved by means of an antenna arrangement for use in a wireless communication system. The arrangement comprises at least two single-polarized antenna functions, which are adapted for radiating an antenna radiation lobe pattern having a horizontal extension in an azimuth plane, and a vertical extension in an elevation plane, perpendicular to the azimuth plane. The antenna functions both have essentially a first polarization in a first direction. According to the present invention, in a second direction separated from the first direction, the second antenna function has a second polarization and the first antenna function has a third polarization. The second polarization and the third polarization are essentially orthogonal to each other.

The object is also solved by means of a node in a wireless communication system, the node comprising an antenna arrangement according to the above.

According to an embodiment example, the third polarization is essentially equal to the first polarization.

According to another embodiment example, the second direction is separated from the first direction at least in an elevation plane.

According to another embodiment example, the vertical components and horizontal polarization components of the first polarization have essentially equal amplitude.

According to another embodiment example, the second direction is intended for communication with a user terminal.

According to another embodiment example, the communication in the second direction comprises communication by means of Multiple Input Multiple Output, MIMO.

According to another embodiment example, the wireless communication system further comprises at least one further base station having corresponding antenna functions. The base stations in the wireless communication system are arranged for communication such that all the antenna functions use essentially identical polarizations, such that each one of two opposite antenna functions comprised in separate base stations experience an essentially orthogonal polarization from the other in the first direction. The first direction is essentially the direction from antenna functions comprised in one one station, towards opposite antenna functions comprised in other base stations.

According to another embodiment example, an antenna function has a first polarization and a second polarization and is continuously variable, from the first polarization to the second polarization, between the first direction and the second direction.

According to another embodiment example, each antenna function with a continuously variable polarization comprises a first element with a first polarization vector and a second element with a second polarization vector. The polarization vectors present an angle between them, where the elements radiate essentially equal radiation patterns, the elements being separated by a distance.

According to another embodiment example, each antenna function with a continuously variable polarization comprises a first element with a first polarization vector and a second element with a second polarization vector. The polarization vectors present an angle between them, where the elements radiate unequal radiation patterns.

A number of advantages are obtained by means of the present invention. For example:

- Interference between receivers is significantly reduced.

- The guard bands and guard periods may be reduced.

- Co-existence is facilitated for services on neighbouring frequency bands.

- The requirement of very little additional hardware in order to implement the present invention means that it is obtained for a relatively low cost.

- The possibility of MIMO communication in one direction and interference suppression in another direction.

BRIEF DESCRIPTION OF THE DRAWINGS

The present invention will now be described more in detail with reference to the appended drawings, where:

Figure 1      shows a simplified view of two base stations and a user terminal;

Figure 2a     shows a simplified top view of a first type of antenna arrangement which is arranged to present an angularly varying polarization;

Figure 2b     shows a simplified front view of a first type of antenna arrangement which is arranged to present an angularly varying polarization;

Figure 3a     shows a simplified top view of a second type of antenna arrangement which is arranged to present an angularly varying polarization; and

Figure 3b     shows a simplified front view of a second type of antenna arrangement which is arranged to present an angularly varying polarization.

DETAILED DESCRIPTION

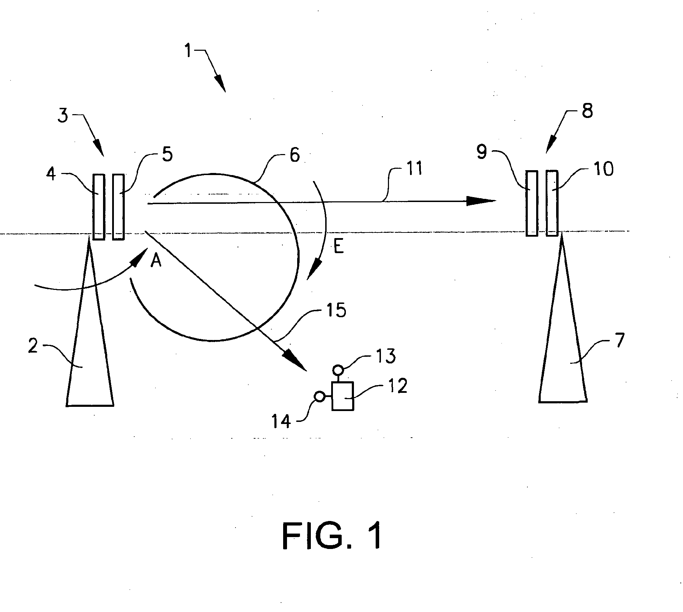

With reference to Figure 1, a wireless communication system 1 comprises a first base station 2 having an antenna arrangement 3 which in turn comprises a first single-polarized antenna 4, and a second single-polarized antenna 5, the first base station having a vertical extension that essentially runs along its longitudinal extension. Each antenna 4, 5 is adapted for radiating an antenna radiation lobe pattern 6 having a horizontal extension in an azimuth plane A, and a vertical extension in elevation planes, perpendicular to the azimuth plane A for all azimuth directions.

The wireless communication system 1 further comprises a second base station 7, also having an antenna arrangement 8 which in turn comprises a first single-polarized antenna 9, and a second single-polarized antenna 10. Each antenna 9, 10 is adapted for radiating an antenna radiation lobe pattern (not shown) having a horizontal extension in an azimuth plane A, and a vertical extension in elevation planes, perpendicular to the azimuth plane A for all azimuth directions.

The first base station's first antenna 4 and second antenna 5 are arranged to transmit signals in a first direction 11 from the first base station's antennas 4, 5 towards the second base station 7 using a first polarization p1, which here is +45° relative the azimuth plane A. The second base station's first antenna 9 and second antenna 10 are arranged to receive signals from said first direction 11, using said first polarization p1 from its point of view. This means that the transmitted signals from the first base station 2 appear essentially orthogonal to the second base station's first and second antennas' 9, 10 receiving polarizations. In this way, the interference from the first base station 2 to the second base station 7 is highly reduced.

A user terminal 12 which comprises a first antenna 13 and a second antenna 14 is arranged for communication via the first base station 2.

According to the present invention, the first base station's second antenna 5 is arranged to transmit signals in a second direction 15 from the first base station's first antenna 4 towards the user terminal 12 using a second polarization p2, and furthermore, the first base station's first antenna 4 is arranged to transmit signals in the second direction 15 using a third polarization p3, where the second polarization p2 is essentially orthogonal to the third polarization p3.

The second direction 15 may have any direction differing from the first direction 11. Normally, the second direction differs from the first direction 11 at least in an elevation plane E, but may also have another azimuth direction than the first direction 11.

In this way, it is possible for the first base station 2 to communicate with the user terminal 12 using two essentially orthogonal polarizations p2, p3, enabling MIMO communication, while at the same time communicate using essentially one and the same polarization p1 in directions where the communicated signals may constitute interference.

According to one alternative, the first polarization p1 and the third polarization p3 are essentially identical.

Both antennas 4, 5 of the first base station 2 thus transmit signals that are orthogonal in polarization towards other base stations 7 with the same antenna design and at mainly the same elevation angle. The variable polarization is designed to change around 90° from the first direction 11 to the second direction 15, where all user terminals 12 connected to wireless communication area cells are located. An increased polarization separation is achieved improving channel rank which increases the possibility to use MIMO.

In order to achieve the above, at least the second antenna 5 has a polarization that is different in different directions, the polarization being a function of transmission direction. Only the second antenna 5 has a polarization that is different in different directions in the case where the first polarization p1 and the third polarization p3 are essentially identical.

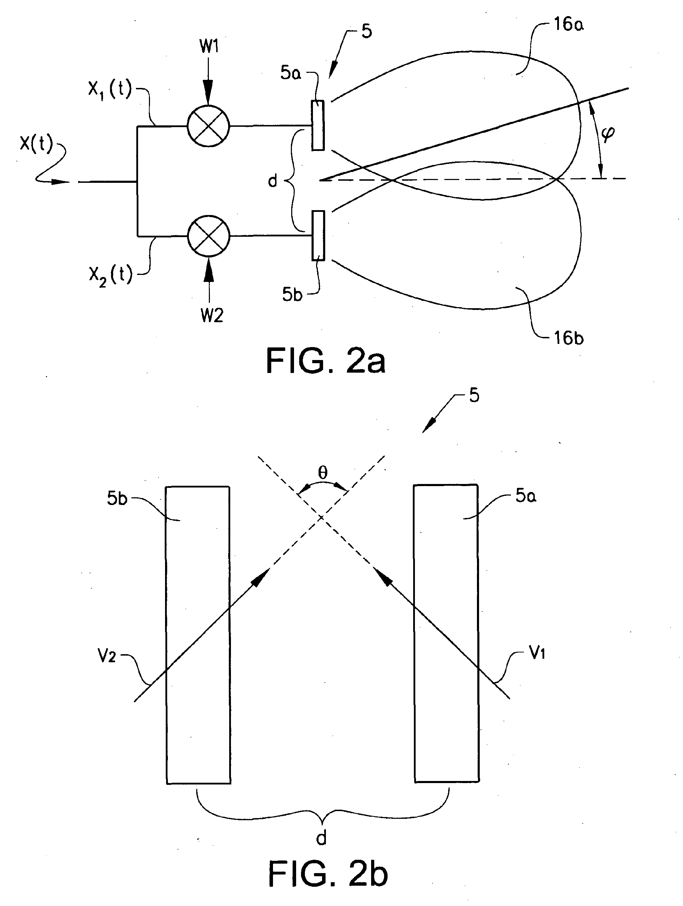

With reference to Figure 2a and Figure 2b, in a first version of the second antenna 5, it is composed of a first element 5a and a second element 5b with a corresponding first radiation pattern 16a and second radiation pattern 16b, the radiation patterns 16a, 16b being essentially similar. The first element 5a radiates with a first polarization having a first polarization vector $v_1$ and the second element 5b radiates with a second polarization, having a second polarization vector $v_2$ with an angle $\theta$ presented between their extensions. The first polarization vector $v_1$ and the second polarization vector $v_2$ are orthogonal in this example, i.e. the angle $\theta = 90°$, but this is not absolutely necessary, some degree of parallelity can be accepted. The two antenna elements 5a, 5b are separated by a small distance d.

An incoming time-varying signal x(t) is divided into two signals $x_1(t)$, $x_2(t)$ to the two elements, where weights w1, w2 are added to the corresponding signals $x_1(t)$, $x_2(t)$.

The net polarization vector for transmissions in a direction $\varphi$ will be:

$$p(\varphi) = w_1 g_1(\varphi) v_1 + w_2 g_2(\varphi) v_2 \cdot \exp\left(\frac{2\pi i d}{\lambda} \sin\varphi\right)$$

For simplicity, in this example w1=w2=1 and g1($\varphi$) = g2($\varphi$) = 1. Thus, the net polarization vector is an angular-dependent linear combination of the two element polarizations:

$$p(\varphi) = v_1 + v_2 \cdot \exp\left(\frac{2\pi i d}{\lambda} \sin\varphi\right)$$

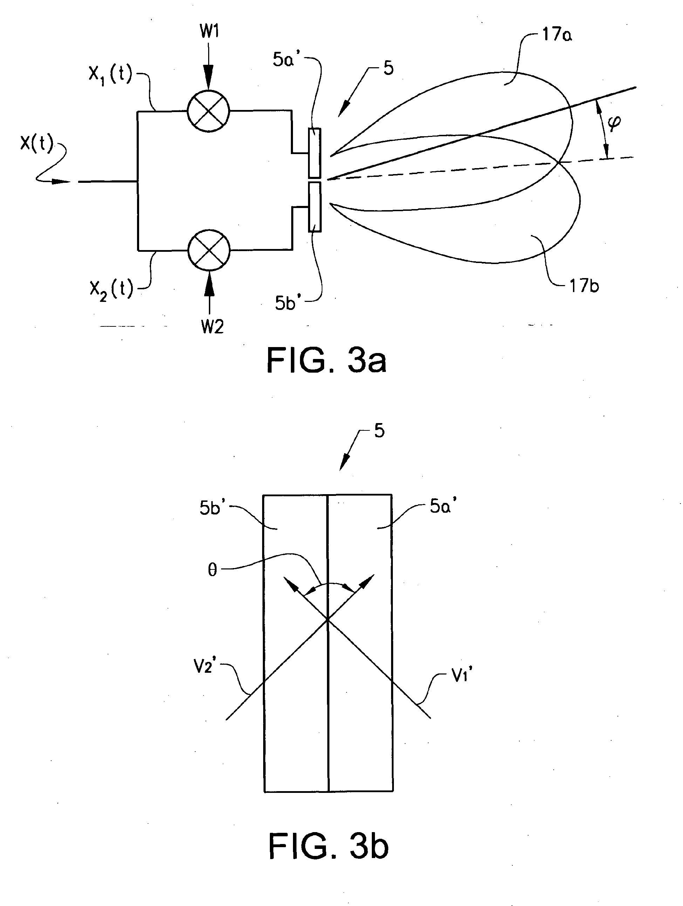

With reference to Figure 3a and Figure 3b, in a second version of the second antenna 5, it is composed of a first element 5a' and a second element 5b' with a corresponding first radiation pattern 17a and second radiation pattern 17b, the radiation patterns 17a, 17b being dissimilar. The first element 5a' radiates with a first polarization having a first polarization vector $v_1'$ and the second element 5b' radiates with a second polarization, having a second polarization vector $v_2'$ with an angle $\theta$ presented between their extensions. The elements 5a', 5b' preferably have a common phase centre, although this is not required. The net polarization in any given direction will be a result of a weighted sum of the first polarization vector $v_1'$ and the second polarization vector $v_2'$,

An incoming time-varying signal x(t) is divided into two signals $x_1(t)$, $x_2(t)$ to the two elements, where weights w1, w2 are added to the corresponding signals $x_1(t)$, $x_2(t)$. The weights w1, w2 are the antenna gains for the elements in that particular direction. By shaping the radiation patterns of the two elements, it is possible to control how the net polarization will behave.

According to the above, the net polarization vector for transmissions in a direction $\varphi$ is:

$$p(\varphi) = w_1 g_1(\varphi) v_1' + w_2 g_2(\varphi) v_2' \cdot \exp\left(\frac{2\pi i d}{\lambda} \sin\varphi\right)$$

and, without loss of generality, setting d=0, w1=1, w2=1 gives

$$p(\varphi) = g_1(\varphi) v_1' + g_2(\varphi) v_2'$$

The present invention can be applied both downlink and uplink, both transmitting and receiving polarization have the same polarization pattern. This limits the interference between unsynchronized TDD base stations as described above. It can also be applied on transmission, letting the receiving base station do normal interference cancellation. Its interference cancellation possibility is improved by the fact that all interference from the other base station have the same polarization.

The simplest application of the present invention is a 2x2 MIMO as exemplified in Figure 1. One stream uses a fixed polarization of 45°, the other stream uses the same 45° in the horizontal direction ($\varphi$=0°) but with a twisted polarization towards mobiles 12 in own cell.

The arrangement is reciprocal, i.e. when the second base station 7 transmits signals, using its first antenna 9 and second antenna 10, the first antenna 9 and second antenna 10 use essentially the same polarization towards the first base station 2, the polarization being +45° relative the azimuth plane. This means that the transmitted signals from the second base station 7 appear essentially orthogonal to the first base station's first and second antennas' 9, 10 receiving polarizations. In this way, the interference from the second station 7 to the first base station 2 is highly reduced.

If all base stations in a larger system, comprising a multitude of base stations, are arranged in this manner, all base station-to-base station interference will be highly reduced, while at the same time enabling MIMO communication with user terminals, using essentially orthogonal polarizations.

There are a number of other straight forward applications:

- Twisting the polarizations of both transmitted streams, but in different directions, to get 0° and 90° in the direction of the own cell (since these polarizations are found to persist best).

- Apply it on higher order MIMO, twisting with different rotation as a function of $\varphi$ resulting in that each stream has a different polarization towards the mobile.

It is possible to use the same transmission polarization for improved transmit diversity instead of MIMO.

The present invention is not limited to the embodiments above but may vary freely within the scope of the appended claims.

For example, the first polarization need not be +45°, the essential feature is that it has vertical and horizontal polarization components of equal amplitude, such as $\pm$45° slant linear, circular, or some elliptic polarizations. The desired effect is that, in the first direction, a signal transmitted from the first base station's first and second antennas will have a polarization that is essentially orthogonal to the polarization of the second base station's first and second antennas, and vice versa.

As discussed previously, the first polarization and the third polarization may or may not be essentially equal. The first polarization may for example be +45°, while the second polarization is 0° and the third polarization is +90°.

All antennas 4, 5; 9, 10; 13, 14 described may be of any suitable type, for example wire antennas, patch antennas or dipole antennas, generally constituting antenna functions. The antenna functions 4, 5; 9, 10; 13, 14 are either separate antennas, or a combined dual polarized antenna.

The antenna functions 13, 14 according to the present invention as described above may also be implemented on a user terminal 12.

Generally, the first direction 11 is essentially the direction from the antenna functions 4, 5; 9, 10 comprised in one base station 2, 7, towards opposite antenna functions 9, 10; 4, 5 comprised in other base stations 7, 2. The first direction 11 may also be a direction from the antenna functions 4, 5; 9, 10 comprised in one base station 2, 7, towards opposite antenna functions comprised in other user terminals which are positioned in, or at the border of, a neighbouring communication area cell.

The first base stations first and second antennas 4, 5 are preferably arranged to transmit signals using the first polarization p1 for all directions lying in essentially the same horizontal plane as the first direction 11, such that interference from the first base station 2 to other, not shown, base stations also is reduced in the same way.

However, it is conceivable that the polarization of at least the second antenna 5 uses the corresponding second/third polarization p2, p3 than the first polarization p1 in another direction in essentially the same horizontal plane as the first direction 11.

Generally, the base station 2 is constituted by a node.

## Claims

1. An antenna arrangement (3) for use in a wireless communication system (1), where the arrangement (3) comprises at least two single-polarized antenna functions (4, 5), each antenna function (4, 5) being adapted for radiating an antenna radiation lobe pattern (6) having a horizontal extension in an azimuth plane (A), and a vertical extension in an elevation plane (E), perpendicular to the azimuth plane (A), where the antenna functions (4, 5) both have essentially a first polarization (p1) in a first direction (11), **characterized in that**, in a second direction (15) separated from the first direction (11), the second antenna function (5) has a second polarization (p2) and the first antenna function (4) has a third polarization (p3), the second polarization (p2) and the third polarization (p3) being essentially orthogonal to each other.

2. An antenna arrangement according to claim 1, **characterized in that** the third polarization (p3) is essentially equal to the first polarization (p1).

3. An antenna arrangement according to claim 1 or 2, **characterized in that** the second direction (15) is separated from the first direction (11) at least in an elevation plane (E).

4. An antenna arrangement according to any one of the preceding claims, **characterized in that** the vertical components and horizontal polarization components of the first polarization (p1) have essentially equal amplitude.

5. An antenna arrangement according to any one of the preceding claims, **characterized in that** the second direction (15) is intended for communication with a user terminal (12).

6. A node in a wireless communication system (1), the node comprising an antenna arrangement (3), which in turn comprises at least two single-polarized antenna functions (4, 5), each antenna function (4, 5) being adapted for radiating an antenna radiation lobe pattern (6) having a horizontal extension in an azimuth plane (A), and a vertical extension in an elevation plane (E), perpendicular to the azimuth plane (A), where the antenna functions (4, 5) both have essentially a first polarization (p1) in a first direction (11), **characterized in that**, in a second direction (15) separated from the first direction (11), one antenna function (5) has a second polarization (p2) and another antenna function (4) has a third polarization (p3), the second polarization (p2) and the third polarization (p3) being essentially orthogonal to each other.

7. A node according to claim 6, **characterized in that** the third polarization (p3) is essentially equal to the first polarization (p1).

8. A node according to any one of the claims 6 or 7, **characterized in that** the vertical components and horizontal polarization components of the first polarization (p1) have essentially equal amplitude.

9. A node according to any one of the claims 6-8, **characterized in that** the second direction (15) is intended for communication with a user terminal (12).

10. A node according to any one of the claims 6-9, **characterized in that** the communication in the second direction (15) comprises communication by means of Multiple Input Multiple Output, MIMO.

11. A node according to any one of the claims 6-10, **characterized in that** it is constituted by a base station (2), which base station in turn comprises said antenna functions (4, 5).

12. A node according to claim 11, **characterized in that** the wireless communication system (1) further comprises at least one further base station (7) having corresponding antenna functions (9, 10), where the base stations (2, 7) in the wireless communication system (1) are arranged for communication such that all the antenna functions (4, 5; 9, 10) use essentially identical polarizations, such that each one of two opposite antenna functions (4, 5; 9, 10) comprised in separate base stations (2, 7) experience an essentially orthogonal polarization from the other in the first direction (11), the first direction (11) essentially being the direction from antenna functions (4, 5; 9, 10) comprised in one base station (2, 7), towards opposite antenna functions (9, 10; 4, 5) comprised in other base stations (7, 2).

13. An antenna function according to any one of the previous claims, **characterized in that** the antenna function (5) has a first polarization (p1) and a second polarization (p2) and is continuously variable, from the first polarization (p1) to the second polarization (p2), between the first direction (11) and the second direction (15).

14. An antenna function according to claim 13, **characterized in that** each antenna function (5) with a continuously variable polarization comprises a first element (5a) with a first polarization vector ($v_1$) and a second element (5b) with a second polarization vector ($v_2$), the polarization vectors ($v_1$, $v_2$) presenting an angle ($\theta$) between them, where the elements (5a, 5b) radiate essentially equal radiation patterns (16a, 16b), the elements (5a, 5b) being separated by a distance (d).

15. An antenna function according to claim 14, **characterized in that** each antenna function (5) with a continuously variable polarization comprises a first element (5a') with a first polarization vector ($v_1$') and a second element (5b') with a second polarization vector ($v_2$'), the polarization vectors ($v_1$', $v_2$') presenting an angle ($\theta$) between them, where the elements (5a', 5b') radiate unequal radiation patterns (17a, 17b).

**Patentansprüche**

1. Antennenanordnung (3) für die Verwendung in einem drahtlosen Kommunikationssystem (1), wobei die Anordnung (3) wenigstens zwei einfach polarisierte Antennenfunktionen (4, 5) umfasst, wobei jede Antennenfunktion (4, 5) ausgebildet ist, um ein Antennenstrahlungskeulenmuster (6) mit einer horizontalen Erstreckung in einer Azimutebene (A) und einer vertikalen Erstreckung in einer Elevationsebene (E) senkrecht zu der Azimutebene (A) auszustrahlen, wobei die Antennenfunktionen (4, 5) beide im Wesentlichen eine erste Polarisation (p1) in einer ersten Richtung (11) aufweisen, **dadurch gekennzeichnet, dass** in einer zweiten Richtung (15), die von der ersten Richtung (11) getrennt ist, die zweite Antennenfunktion (5) eine zweite Polarisation (p2) aufweist und die erste Antennenfunktion (4) eine dritte Polarisation (p3) aufweist, wobei die zweite Polarisation (p2) und die dritte Polarisation (p3) im Wesentlichen orthogonal zueinander sind.

2. Antennenanordnung nach Anspruch 1, **dadurch gekennzeichnet, dass** die dritte Polarisation (p3) im Wesentlichen gleich der ersten Polarisation (p1) ist.

3. Antennenanordnung nach Anspruch 1 oder 2, **dadurch gekennzeichnet, dass** die zweite Richtung (15) von der ersten Richtung (11) wenigstens in einer Elevationsebene (E) getrennt ist.

4. Antennenanordnung nach einem der vorstehenden Ansprüche, **dadurch gekennzeichnet, dass** die vertikalen Komponenten und die horizontalen Polarisationskomponenten der ersten Polarisation (p1) im Wesentlichen die gleiche Amplitude aufweisen.

5. Antennenanordnung nach einem der vorstehenden Ansprüche, **dadurch gekennzeichnet, dass** die zweite Richtung (15) für eine Kommunikation mit einem Benutzerendgerät (12) vorgesehen ist.

6. Knoten in einem drahtlosen Kommunikationssystem (1), wobei der Knoten eine Antennenanordnung (3) umfasst, die wiederum wenigstens zwei einfach polarisierte Antennenfunktionen (4, 5) umfasst, wobei jede Antennenfunktion (4, 5) ausgebildet ist, um ein Antennenstrahlungskeulenmuster (6) mit einer horizontalen Erstreckung in einer Azimutebene (A) und einer vertikalen Erstreckung in einer Elevationsebene (E) senkrecht zu der Azimutebene (A) auszustrahlen, wobei die Antennenfunktionen (4, 5) beide im Wesentlichen eine erste Polarisation (p1) in einer ersten Richtung (11) aufweisen, **dadurch gekennzeichnet, dass** in einer zweiten Richtung (15), die von der ersten Richtung (11) getrennt ist, eine Antennenfunktion (5) eine zweite Polarisation (p2) aufweist und eine andere Antennenfunktion (4) eine dritte Polarisation (p3) aufweist, wobei die zweite Polarisation (p2) und die dritte Polarisation (p3) im Wesentlichen orthogonal zueinander sind.

7. Knoten nach Anspruch 6, **dadurch gekennzeichnet, dass** die dritte Polarisation (p3) im Wesentlichen gleich der ersten Polarisation (p1) ist.

8. Knoten nach Anspruch 6 oder 7, **dadurch gekennzeichnet, dass** die vertikalen Komponenten und die horizontalen Polarisationskomponenten der ersten Polarisation (p1) im Wesentlichen die gleiche Amplitude aufweisen.

9. Knoten nach einem der Ansprüche 6 bis 8, **dadurch gekennzeichnet, dass** die zweite Richtung (15) für eine Kommunikation mit einem Benutzerendgerät (12) vorgesehen ist.

10. Knoten nach einem der Ansprüche 6 bis 9, **dadurch gekennzeichnet, dass** die Kommunikation in der zweiten Richtung (15) eine MIMO (Multiple Input Multiple Output)-Kommunikation umfasst.

11. Knoten nach einem der Ansprüche 6 bis 10, **dadurch gekennzeichnet, dass** dieser durch eine Basisstation (2) gebildet wird, wobei die Basisstation wiederum die Antennenfunktionen (4, 5) umfasst.

12. Knoten nach Anspruch 11, **dadurch gekennzeichnet, dass** das drahtlose Kommunikationssystem (1) weiterhin wenigstens eine weitere Basisstation (7) umfasst, die entsprechende Antennenfunktionen (9, 10) aufweist, wobei die Basisstationen (2, 7) in dem drahtlosen Kommunikationssystem (1) derart für eine Kommunikation angeordnet sind, dass alle Antennenfunktionen (4, 5; 9, 10) im Wesentlichen identische Polarisationen verwenden, sodass jede der zwei entgegengesetzten Antennenfunktionen (4, 5; 9, 10) in separaten Basisstationen (2, 7) eine im Wesentlichen orthogonale Polarisation von der anderen in der ersten Richtung (11) erfährt, wobei die erste Richtung (11) im Wesentlichen die Richtung von Antennenfunktionen (4, 5; 9, 10) in einer Basisstation (2, 7) zu entgegengesetzten Antennenfunktionen (9, 10; 4, 5) in anderen Basisstationen (7, 2) ist.

**13.** Antennenfunktion nach einem der vorstehenden Ansprüche, **dadurch gekennzeichnet, dass** die Antennenfunktion (5) eine erste Polarisation (p1) und eine zweite Polarisation (p2) aufweist und kontinuierlich von der ersten Polarisation (p1) zu der zweiten Polarisation (p2) zwischen der ersten Richtung (11) und der zweiten Richtung (15) variabel ist.

**14.** Antennenfunktion nach Anspruch 13, **dadurch gekennzeichnet, dass** jede Antennenfunktion (5) mit einer kontinuierlich variablen Polarisation ein erstes Element (5a) mit einem ersten Polarisationsvektor ($v_1$) und ein zweites Element (5b) mit einem zweiten Polarisationsvektor ($v_2$) umfasst, wobei die Polarisationsvektoren ($v_1$, $v_2$) dazwischen einen Winkel ($\theta$) aufweisen, wobei die Elemente (5a, 5b) im Wesentlichen gleiche Strahlungsmuster (16a, 16b) ausstrahlen und wobei die Elemente (5a, 5b) durch eine Distanz (d) voneinander getrennt sind.

**15.** Antennenfunktion nach Anspruch 14, **dadurch gekennzeichnet, dass** jede Antennenfunktion (5) mit einer kontinuierlich variablen Polarisation ein erstes Element (5a') mit einem ersten Polarisationsvektor ($v_1$') und ein zweites Element (5b') mit einem zweiten Polarisationsvektor ($v_2$') umfasst, wobei die Polarisationsvektoren ($v_1$', $v_2$') dazwischen einen Winkel ($\theta$) aufweisen und wobei die Elemente (5a', 5b') ungleiche Strahlungsmuster (17a, 17b) ausstrahlen.

## Revendications

**1.** Agencement d'antennes (3) destiné à être utilisé dans un système de communication sans fil (1), où l'agencement (3) comprend au moins deux fonctions d'antenne à polarisation simple (4, 5), chaque fonction d'antenne (4, 5) étant adaptée à rayonner un diagramme de lobes de rayonnement d'antenne (6) ayant une extension horizontale dans un plan azimutal (A) et une extension verticale dans un plan d'élévation (E), perpendiculaire au plan azimutal (A), où les fonctions d'antenne (4, 5) ont toutes deux sensiblement une première polarisation (p1) dans une première direction (11), **caractérisé en ce que**, dans une seconde direction (15) distincte de la première direction (11), la seconde fonction d'antenne (5) possède une deuxième polarisation (p2) et la première fonction d'antenne (4) possède une troisième polarisation (p3), la deuxième polarisation (p2) et la troisième polarisation (p3) étant sensiblement orthogonales l'une par rapport à l'autre.

**2.** Agencement d'antennes selon la revendication 1, **caractérisé en ce que** la troisième polarisation (p3) est sensiblement identique à la première polarisation (p1).

**3.** Agencement d'antennes selon la revendication 1 ou 2, **caractérisé en ce que** la seconde direction (15) est séparée de la première direction (11) au moins dans un plan d'élévation (E).

**4.** Agencement d'antennes selon l'une quelconque des revendications précédentes, **caractérisé en ce que** les composantes verticales et les composantes de polarisation horizontale de la première polarisation (p1) ont des amplitudes sensiblement égales.

**5.** Agencement d'antennes selon l'une quelconque des revendications précédentes, **caractérisé en ce que** la seconde direction (15) est destinée à une communication avec un terminal d'utilisateur (12).

**6.** Noeud dans un système de communication sans fil (1) le noeud comprenant un agencement d'antennes (3) qui comprend lui-même au moins deux fonctions d'antenne à polarisation simple (4, 5), chaque fonction d'antenne (4, 5) étant adaptée à rayonner un diagramme de lobes de rayonnement d'antenne (6) ayant une extension horizontale dans un plan azimutal (A) et une extension verticale dans un plan d'élévation (E), perpendiculaire au plan azimutal (A), où les fonctions d'antenne (4, 5) ont toutes deux sensiblement une première polarisation (p1) dans une première direction (11), **caractérisé en ce que**, dans une seconde direction (15) distincte de la première direction (11), une fonction d'antenne (5) possède une deuxième polarisation (p2) et une autre fonction d'antenne (4) possède une troisième polarisation (p3), la deuxième polarisation (p2) et la troisième polarisation (p3) étant sensiblement orthogonales l'une par rapport à l'autre.

**7.** Noeud selon la revendication 6, **caractérisé en ce que** la troisième polarisation (p3) est sensiblement identique à la première polarisation (p1).

**8.** Noeud selon l'une quelconque des revendications 6 ou 7, **caractérisé en ce que** les composantes verticales et les composantes de polarisation horizontale de la première polarisation (p1) ont des amplitudes sensiblement égales.

**9.** Noeud selon l'une quelconque des revendications 6 à 8, **caractérisé en ce que** la seconde direction (15) est destinée à une communication avec un terminal d'utilisateur (12).

**10.** Noeud selon l'une quelconque des revendications 6 à 9, **caractérisé en ce que** la communication dans la seconde direction (15) comprend une communication au moyen d'une entrée multiple sortie multiple, MIMO.

**11.** Noeud selon l'une quelconque des revendications 6 à 10, **caractérisé en ce qu'**il est constitué d'une station de base (2), station de base comprenant elle-même lesdites fonctions d'antenne (4, 5).

**12.** Noeud selon la revendication 11, **caractérisé en ce que** le système de communication sans fil (1) comprend en outre au moins une autre station de base (7) ayant des fonctions d'antenne correspondantes (9, 10), où les stations de base (2, 7) dans le système de communication sans fil (1) sont agencées pour une communication telle que toutes les fonctions d'antenne (4, 5; 9, 10) utilisent des polarisations sensiblement identiques, de sorte que chacune de deux fonctions d'antenne opposées (4, 5; 9, 10) comprises dans des stations de base séparées (2, 7) fait l'objet d'une polarisation sensiblement orthogonale par rapport à l'autre dans la première direction (11), la première direction (11) étant sensiblement la direction allant des fonctions d'antenne (4, 5; 9, 10) comprises dans une station de base (2, 7) vers des fonctions d'antenne opposées (9, 10; 4, 5) comprises dans les autres stations de base (7, 2).

**13.** Fonction d'antenne selon l'une quelconque des revendications précédentes, **caractérisé en ce que** la fonction d'antenne (5) possède une première polarisation (p1) et une deuxième polarisation (p2) et est variable en continu de la première polarisation (p1) à la deuxième polarisation (p2) entre la première direction (11) et la seconde direction (15).

**14.** Fonction d'antenne selon la revendication 13, **caractérisée en ce que** chaque fonction d'antenne (5) avec une polarisation variable en continu comprend un premier élément (5a) avec un premier vecteur de polarisation ($v_1$) et un second élément (5b) avec un second vecteur de polarisation ($v_2$), les vecteurs de polarisation ($v_1$, $v_2$) présentant un angle ($\theta$) entre eux, où les éléments (5a, 5b) rayonnent des diagrammes de rayonnement sensiblement identiques (16a, 16b), les éléments (5a, 5b) étant séparés d'une certaine distance (d).

**15.** Fonction d'antenne selon la revendication 14, **caractérisée en ce que** chaque fonction d'antenne (5) avec une polarisation variable en continu comprend un premier élément (5a') avec un premier vecteur de polarisation ($v_1$') et un second élément (5b') avec un second vecteur de polarisation ($v_2$'), les vecteurs de polarisation ($v_1$', $v_2$') présentant un angle ($\theta$) entre eux, où les éléments (5a', 5b') rayonnent des diagrammes de rayonnement inégaux (17a, 17b).

FIG. 1

FIG. 2a

FIG. 2b

FIG. 3a

FIG. 3b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1227539 A1